# EUROPÄISCHE PATENTSCHRIFT

(11) **EP 3 437 458 B1**
(45) Veröffentlichungstag und Bekanntmachung des Hinweises auf die Patenterteilung: **23.09.2020**
(21) Anmeldenummer: 18183011.8
(22) Anmeldetag: 11.07.2018
(51) Int. Cl.: A01F 15/08

(54) **EINRICHTUNG ZUR STEUERUNG DER AUSLASSKLAPPE EINER BALLENPRESSE, BALLENPRESSE UND VERFAHREN**
BALER AND DEVICE AND METHOD FOR CONTROLLING THE DISCHARGE FLAP OF A BALER
DISPOSITIF DE COMMANDE DU CLAPET DE SORTIE D'UNE PRESSE À BALLES, PRESSE À BALLES ET PROCÉDÉ

(30) Priorität: 02.08.2017 DE 102017213436
(43) Veröffentlichungstag der Anmeldung: 06.02.2019
(73) Patentinhaber: Deere & Company, Moline, IL 61265 (US)
(72) Erfinder: Humbert, Clement, 68163 Mannheim (DE); Mercier, Jean-Alexis, 68163 Mannheim (DE)
(74) Vertreter: Reichert, Christian

(56) Entgegenhaltungen:
- EP-A1- 2 042 028
- EP-A1- 2 923 560
- EP-A1- 3 150 061
- AU-B2- 2012 307 238

## Beschreibung

Die vorliegende Erfindung betrifft eine Einrichtung zur Steuerung der Auslassklappe einer Ballenpresse in wenigstens einem manuellen und einem automatischen Modus mit einer ersten und einer zweiten Druckleitung über die ein Auslassklappenantrieb selektiv mit Druck beaufschlagbar ist, eine Ballenpresse mit einer Auslassklappe, die mittels einem Auslassklappenantrieb zumindest in eine erste Position in der die Auslassklappe einen Pressraum der Ballenpresse zumindest im Wesentlichen verschließt und in eine zweite Position bringbar ist, in der sie eine Öffnung freigibt, durch die ein Ballen den Pressraum der Ballenpresse verlassen kann, und ein Verfahren zur Steuerung der Auslassklappe einer Ballenpresse .

Bekannte Einrichtungen zur Steuerung der Auslassklappe einer Ballenpresse werden eingesetzt, um eine Ausslassklappe der Ballenpresse derart zu steuern, dass sie zumindest während eines Ballenbildungsvorgangs in einem Pressraum der Ballenpresse geschlossen ist und es nach Abschluss des Ballenbildungsvorgangs einem in dem Pressraum der Ballenpresse gebildeten Ballen ermöglicht, den Pressraum zu verlassen bzw. aus diesem ausgestoßen zu werden, um danach beispielsweise auf dem Untergrund abgelegt oder an eine weitere Einrichtung, beispielsweise eine Wickel- bzw. Umhüllungseinrichtung, übergeben zu werden. Eine derartige Einrichtung wird beispielsweise in der EP-A1-2042028 gezeigt.

Derartige Ballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen.

Bekannte Einrichtungen zur Steuerung der Auslassklappe einer Ballenpresse sind meist komplex. Einfache Einrichtungen erlauben häufig keinen Betrieb in einem automatischen Modus. Ist ein automatischer Modus vorgesehen, so kann insbesondere in einer Notsituation ein manuelles Eingreifen einer Bedienungsperson oder ein spontanes Rückführen der Einrichtung in einen manuellen Modus nur erschwert oder nicht möglich sein. Insbesondere kann eine derartige Einrichtung üblicherweise nicht direkt durch ein Steuerventil eines Zugfahrzeugs angesteuert werden.

Die der Erfindung zugrunde liegende Aufgabe wird daher darin gesehen, eine Einrichtung zur Steuerung der Auslassklappe einer Ballenpresse, eine Ballenpresse bzw. ein Verfahren zur Steuerung der Auslassklappe einer Ballenpresse anzugeben, durch welche die vorgenannten Nachteile überwunden werden.

Die Aufgabe wird erfindungsgemäß durch die Lehre der Patentansprüche 1, 8 bzw. 9 gelöst. Weitere vorteilhafte Ausgestaltungen und Weiterbildungen der Erfindung gehen aus den Unteransprüchen hervor.

Diesbezüglich weist eine Einrichtung zur Steuerung der Auslassklappe einer Ballenpresse in wenigstens einem manuellen und einem automatischen Modus eine erste und eine zweiten Druckleitung auf, über die ein Auslassklappenantrieb selektiv mit Druck beaufschlagbar ist. Mit den Druckleitungen sind Druckmessmittel wirksam verbunden, die geeignet sind, einen jeweils in der Druckleitung anstehenden Druck zu ermitteln. Mit den Druckleitungen ist den Druckmessmitteln nachgeordnet ein wenigstens eine erste und eine zweite Durchlassstellung sowie eine Sperrstellung aufweisendes Verteilerventil verbunden. In dem wenigstens einen automatischen Modus nimmt das Verteilerventil in Abhängigkeit vom Wert einer Druckdifferenz zwischen den ermittelten Drücken eine vorbestimmte Stellung (erste, zweite Durchlass- bzw. Sperrstellung) ein. Auf diese Weise kann das Verteilerventil unabhängig davon, welche der Druckleitungen mit Druck beaufschlagt wird, die vorbestimmte Stellung einnehmen, in der wiederum der Auslassklappenantrieb entsprechend einer gewünschten bzw. geforderten, erforderlichen Bewegung der Auslassklappe mit Druck beaufschlagt wird. Der Wert der Druckdifferenz kann hierbei äquivalent für die Strömungsrichtung eines Druckmediums in der Einrichtung bzw. in den Druckleitungen der Einrichtung stehen.

Vorzugsweise wird das Verteilerventil in einer ersten Durchlassstellung den Auslassklappenantrieb derart mit Druck beaufschlagen, dass dieser die Auslassklappe in eine erste Position bringt, in der sie einen Pressraum der Ballenpresse zumindest im Wesentlichen verschließt, und in einer zweiten Durchlassstellung den Auslassklappenantrieb derart mit Druck beaufschlagen, dass dieser die Auslassklappe in eine zweite Position bringt, in der sie eine Öffnung freigibt, durch den ein Ballen den Pressraum verlassen kann. Dabei korrespondiert die erste Durchlassstellung in dem automatischen Modus vorzugsweise mit einem Wert der Druckdifferenz mit einem ersten, insbesondere positiven bzw. negativen, Vorzeichen und die zweite Durchlassstellung mit einem Wert der Druckdifferenz mit einem dem ersten entgegensetzen Vorzeichen, wodurch das Verteilerventil unabhängig von der Strömungsrichtung eines Druckmediums in den Druckleitungen bzw. unabhängig davon, welche der Druckleitungen bei Aktivierung des automatischen Modus mit Druck beaufschlagt, eine vorbestimmte Stellung einnimmt.

Die Druckleitungen können derart ausgebildet sein, dass sie direkt oder indirekt an ein Steuerventil eines Zugfahrzeugs anschließbar sind. Dieses Steuerventil steht vorzugsweise derart mit einer Druckquelle in Verbindung, dass es entweder die erste oder die zweite Druckleitung mit Druck beaufschlagen oder eine Sperrstellung einnehmen kann, in der keine der Druckleitungen mit Druck beaufschlagt wird. Auf diese Weise kann die Einrichtung über ein zumindest weitestgehend konventionelles Steuerventil, wie es häufig an Zugfahrzeugen, wie beispielsweise Ackerschleppern, vorgesehen ist, angesteuert werden. Bei der Druckquelle kann es sich um eine eigenständige, von der Ballenpresse unabhängige Druckquelle oder eine an bzw. mit der Ballenpresse zusammenwirkende Druckquelle handeln. Besonders günstig ist es aber, wenn die Druckquelle an dem Zugfahrzeug vorgesehen ist bzw. durch eine Druckquelle des Zugfahrzeugs gebildet wird.

Vorzugsweise ist der automatische Modus nur dann aktivierbar, wenn der Wert der Druckdifferenz nicht zumindest annähernd Null ist bzw. das Steuerventil nicht seine Sperrstellung einnimmt. Besonders günstig ist es, wenn der automatische Modus automatisch deaktivierbar ist, insbesondere sobald der Wert der Druckdifferenz zumindest annähernd Null ist bzw. das Steuerventil seine Sperrstellung einnimmt. Auf diese Weise kann eine Bedienungsperson direkt und/oder in einfacher Weise Einfluss auf die sich im automatischen Modus befindende Einrichtung erlangen und eine manuelle Steuerung der Auslassklappe der Ballenpresse vornehmen, beispielsweise indem sie einen mit dem Steuerventil wirksam verbundenen Joystick oder ein anderes Steuermittel betätigt und/oder in eine mit der Sperrstellung des Steuerventils korrespondierende Neutralstellung bringt.

Weist der Auslassklappenantrieb zumindest einen, vorzugsweise einen einen Zylinder und einen in dem Zylinder durch Beaufschlagung mit Druck zumindest in eine bezogen auf den Zylinder eingefahrene und eine bezogen auf den Zylinder ausgefahrene Stellung bringbaren Kolben aufweisenden Hydraulikmotor auf bzw. ist er als ein solcher ausgebildet, so kann der Kolben über die Druckleitungen entsprechend mit Druck beaufschlagt werden, dass er die Auslassklappe bewegen bzw. in ihre erste bzw. ihre zweite Position bringen kann. Insbesondere wirkt der Auslassklappenantrieb derart mit der Auslassklappe zusammen, dass er diese insbesondere mit Bezug auf die Ballenpresse bzw. einen Rahmen der Ballenpresse um eine vorzugsweise insbesondere horizontal ausgerichtet Schwenkachse verschwenkt.

Besonders günstig ist es, wenn eine Steuereinheit zur direkten oder indirekten Ansteuerung zumindest des Verteilerventil vorgesehen ist. Diese Steuereinheit kann unabhängig vorgesehen sein, sie kann aber auch Teil einer Steuereinheit der Ballenpresse bzw. des Zugfahrzeugs sein und/oder durch eine solche Steuereinheit gebildet werden.

Ist eine Betätigungseinrichtung zur Wahl wenigstens eines manuellen und eines automatischen Modus vorgesehen, so kann diese mit einer/der Steuereinheit wirksam verbindbar sein. Bei der Betätigungseinrichtung kann es sich beispielsweise um einen Betätigungsschalter oder -knopf handeln. Dieser kann eigenständig vorgesehen oder aber in eine/die Steuereinrichtung und/oder ein Steuerpanel des Zugfahrzeugs bzw. der Ballenpresse integriert sein.

Weist eine Ballenpresse mit einer Auslassklappe, die mittels eines Auslassklappenantriebs zumindest in eine erste Position in der die Auslassklappe den Pressraum der Ballenpresse zumindest im Westlichen verschließt und in eine zweite Position bringbar ist, in der sie eine Öffnung freigibt, durch die ein Ballen den Pressraum der Ballenpresse verlassen kann, eine zuvor beschriebene Einrichtung zur Betätigung der Auslassklappe auf, so kann die Ballenpresse in einem manuellen als auch einem automatischen Modus betrieben werden, wobei das Verteilerventil in dem automatischen Modus in Abhängigkeit von dem Wert bzw. einem Vorzeichen des Werts der Druckdifferenz zwischen den in den Druckleitungen anstehenden Drück so angesteuert werden kann, dass es eine vorbestimmte Stellung einnimmt.Derartige Ballenpressen werden sowohl im landwirtschaftlichen als auch im industriellen Bereich eingesetzt. Bei der Ballenpresse handelt es sich insbesondere um eine landwirtschaftliche Ballenpresse zur Bildung rundzylindrischer Ballen. Die Ballenpresse kann aber auch im industriellen Bereich, beispielsweise zur Bildung von Ballen aus Papier, Müll, Stoff oder anderen Materialien eingesetzt werden. Der Pressraum der Ballenpresse kann größenunveränderlich und/oder größenveränderlich bzw. variabel vorgesehen sein, wobei Pressmittel in der Art von Pressrollen, aber auch von Pressriemen oder anderen geeigneten Mittel oder eine Kombination davon vorgesehen sein können. Die Ballenpresse kann darüber hinaus oder alternativ auch als ein Kombinationsgerät, das neben der Pressfunktion weitere Funktionen aufweisen kann, ausgebildet sein. Beispielsweise kann vorgesehen sein, dass der in dem Pressraum gebildete Ballen gebunden und/oder mit einem Material, beispielsweise einer Folie oder einem Netz umwickelt bzw. umhüllt wird.

Gemäß einem Verfahren zur Steuerung der Auslassklappe einer zuvor beschriebenen Ballenpresse in wenigstens einem manuellen und einem automatischen Modus, ermitteln die Druckmessmittel einen jeweils in der Druckleitung anstehenden Druck, worauf das Verteilerventil zumindest in dem wenigstens einen automatischen Modus in Abhängigkeit vom Wert einer Differenz zwischen den ermittelten Drücken eine vorbestimmte Stellung einnimmt.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine schematische Seitenansicht einer an ein Zugfahrzeug angehängten Ballenpresse und
- Fig. 2: einen schematischen Hydraulikplan einer Einrichtung zur Steuerung einer Auslassklappe einer Ballenpresse.

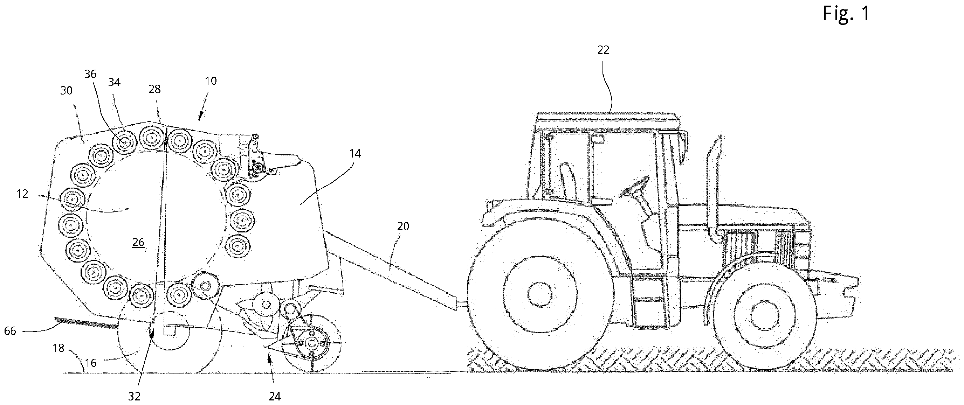

In der Figur 1 der Zeichnung wird eine schematisch dargestellte Ballenpresse 10, in der Art einer landwirtschaftlichen Rundballenpresse zum Pressen eines rundzylindrischen Ballens 12 gezeigt, welche einen Gehäuseteil 14 aufweist, der sich mittels Rädern 16 auf einem Untergrund 18 abstützt und die mittels einer Deichsel 20 an ein Zugfahrzeug 22, z. B. einen Ackerschlepper, anschließbar ist.

An einer bezogen auf eine Vorwärtsfahrtrichtung vorderen, unteren Seite des Gehäuseteils 14 befindet sich in bekannter Weise eine Aufnahmevorrichtung 24 zur Aufnahme und Zufuhr von Erntegut, die geschnittenes Erntegut in einen Pressraum 26 fördert, wobei der Gehäuseteil 14 einen vorderen Teil des Pressraum 26 umgibt. An dem rückwärtigen oberen Eckbereich des ersten Gehäuseteils 14 befindet sich ein Lager 28 für eine einen zweiten Gehäuseteil bildende schwenkbare Auslassklappe 30, die einen hinteren Teil des Pressraums 26 umgibt. Die Auslassklappe 30 gibt im geöffneten Zustand eine Öffnung 32 frei, durch welche ein von der Ballenpresse 10 gepresster Ballen 12 abgesetzt bzw. entladen oder ausgeworfen werden kann.

Gemäß dem vorliegenden Ausführungsbeispiel ist der Pressraum 26 der Ballenpresse 10 größenunveränderlich ausgebildet und die Ballenpresse 10 weist eine Vielzahl zueinander parallel verlaufender Pressrollen 34 (exemplarisch wurden hier nur einige wenige Pressrollen 34 mit dem Bezugszeichen 34 versehen), deren Rollachsen 36 bei geschlossenem zweiten Gehäuseteil 24 auf einem Kreisbogen gelegen sind, und von denen wenigstens einige angetrieben sind. Die Pressrollen 36 dienen, neben einem Pressen und einer Formgebung, insbesondere auch einer Rotationserzeugung oder einer Rotationserhaltung des in dem Pressraum 20 angeordneten Rundballens 12. Die Ballenpresse 10 ist hier exemplarisch zur Darstellung der Öffnung 32 mit leicht geöffneter Auslassklappe 30 abgebildet.

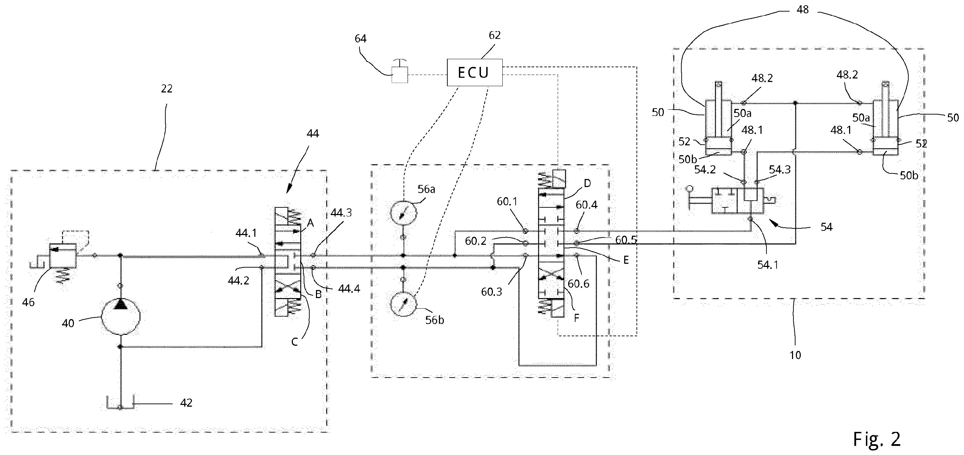

Es wird nun auch auf die Figur 2 Bezug genommen, in der eine Einrichtung 38 zur Steuerung der Auslassklappe 30 in zumindest einem manuellen und einem automatischen Modus schematisch dargestellt wird. Gemäß dem vorliegenden Ausführungsbeispiel ist eine Druckquelle 40 vorgesehen, bei der es sich um eine Hydraulikpumpe des Zugfahrzeugs 22 handelt. Die Druckquelle 40 steht in konventioneller Weise mit einem Druckmittelreservoir 42 des Zugfahrzeugs 22 in Verbindung und liefert über ein Steuerventil 44, dass hier als elektromagnetisch betätigbares 4/3-Wegeventil mit vier Anschlüsse 44.1, 44.2, 44.3 und 44.4 ausgeführt ist, einen Hydraulikdruck für an das Zugfahrzeug 22 anschließbare Anbaugeräte, wie beispielsweise der hier beschriebenen Ballenpresse 10. Darüber hinaus ist in der Steuerungseinrichtung 38 in ebenfalls bekannter Weise ein Überdruckventil 46 vorgesehen, das öffnet, sollte in der Hydraulikkreis der Steuerungseinrichtung 38 ein Druck anstehen, der einen vergebenen Höchstdruck übersteigt.

Zur Betätigung der schwenkbaren Auslassklappe 30 sind an der Ballenpresse zwei gemeinsam ansteuerbare Schwenkantriebe bzw. Auslassklappenantriebe 48 vorgesehen, die in bekannter Art und Weise als doppeltwirkenden Hydraulikmotoren ausgebildet sind und erste Anschlüsse 48.1 und zweite Anschlüsse 48.2 aufweisen. Es ist aber auch denkbar, dass nur ein Auslassklappenantrieb 48 bzw. nur ein Hydraulikmotor vorgesehen ist. Die Auslassklappenantriebe 48 weisen jeweils einen Zylinder 50 und einen in dem Zylinder 50 verschiebbaren Kolben 52 auf, wobei der Kolben 52 den Zylinder 50 in einen ersten und einen zweiten Zylinderbereich 50a, 50b unterteilt. Den Auslassklappenantrieben 48 vorgelagert ist ein gemäß dem vorliegenden Ausführungsbeispiel manuell betätigbarer, arretierbarer Sperrschieber 54 mit Anschlüssen 54.1, 54.2 und 54.3 vorgesehen, mittels dem ein Hydraulikfluss zu und von den Schwenkantrieben 48 über deren Anschlüssen 48.1 und 48.2 erlaubt bzw. unterbunden werden kann.

Das Steuerventil 44 kann wahlweise eine Stellung A, B oder C einnehmen, wobei in der ersten Stellung A eine ein erstes Druckmessmittel 56a aufweisende Druckleitung 58a über die Anschlüsse 44.1 und 44.2 mit Druck beaufschlagt wird. Nimmt das Steuerventil 44 seine dritte Stellung C ein, so wird eine zweite, ebenfalls ein Druckmessmittel 56b aufweisende Druckleitung 58b über die Anschlüsse 44.1 und 44.4 mit Druck beaufschlagt Nimmt das Steuerventil 44 seine mittlere Stellung bzw. seine Sperrstellung B ein, wird ein Hydraulikfluss unterbunden bzw. es wird keine der Druckleitungen 58a, b mit Druck beaufschlagt.

Weiter ist ein Auslassklappen- bzw. Verteilerventil 60 vorgesehen, das als ein elektromagnetisch betätigbares 6/3-Wegeventil ausgebildet ist und sechs Anschlüsse 60.1, 60.2, 60.3, 60.4, 60.5 und 60.6 aufweist. Das Verteilerventil 60 ist zwischen den Druckmessmitteln 56a,b und dem Sperrschieber 54 vorgesehen und kann drei Stellungen, eine erste Durchlassstellung D, eine Sperrstellung E und eine zweite Durchlassstellung F einnehmen. In seiner ersten Durchlassstellung D verbindet das Verteilerventil 60 die erste Druckleitung 58a über seine Anschlüsse 60.1 und 60.4 mit dem ersten Anschluss 54.1 des Sperrschiebers 54 und über die zweiten Anschlüsse 54.2 und 54.3 des Sperrschiebers 54 mit den ersten Anschlüssen 48.1 der Schwenkantriebe 48. Über die Anschlüsse 60.2 und 60.5 wird eine Verbindung zwischen den zweiten Anschlüssen 48.2 der Auslassklappenantriebe 48 mit der zweiten Druckleitung 58b hergestellt. In seiner Sperrstellung E wird ein Hydraulikfluss zu und von den Auslassklappenantrieben 48 unterbunden und es wird über die Anschlüsse 60.3 und 60.6 eine Verbindung zwischen den Druckleitungen 58a und 58b hergestellt. In der zweiten Durchlassstellung F wird über die Anschlüsse 60.1 und 60.5 eine Verbindung mit dem ersten Anschluss 54.1 des Sperrschiebers 54 und über die zweiten Anschlüsse 54.2 und 54.3 des Sperrschiebers 54 mit den ersten Anschlüssen 48.1 der Auslassklappenantriebe 48 hergestellt. Über die Anschlüsse 60.2 und 60.4 werden die zweiten Anschlüssen 48.2 der Auslassklappenantriebe 48 mit der zweiten Druckleitung 58b verbunden.

Darüber hinaus ist eine Steuer- bzw. Regeleinheit 62 zur Steuerung und/oder Regelung einzelner oder mehrerer Funktionen bzw. Abläufe der Ballenpresse 10 vorgesehen, über die das Verteilerventil 60 angesteuert werden kann. Die Steuerungseinheit 62 ist mit einer Betätigungseinrichtung 64 zur Aktivierung bzw. Deaktivierung eines Automatikmodus der Auslassklappe 30 und darüber hinaus mit den Druckmessmitteln 56a, b wirksam verbunden.

Im Folgenden soll nun genauer auf die Funktionsweise der zuvor beschriebenen Einrichtung 38 eingegangen werden.

Die Ballenpresse 10 kann in einem manuellen und einem automatischen Modus betrieben werden, der von einer Bedienungsperson über die vorzugsweise in einer Kabine des Zugfahrzeugs 22 angeordneten Betätigungseinrichtung 64 ausgewählt werden kann.

Im manuellen Modus ist ein Neutralzustand vorgesehen, in dem das Steuerventil 44 seine Sperrstellung B und das Verteilerventil 60 seiner ersten Durchlassstellung D einnimmt. In diesem Neutralzustand wird keine der Druckleitungen 58a, b mit Druck beaufschlagt.

Zum Öffnen der Auslassklappe 30 wird das Steuerventil 44 in bekannter Art und Weise angesteuert und nimmt seine Stellung A ein, in der die Druckleitung 58a mit Druck beaufschlagt wird. Das Verteilerventil 60 befindet sich unverändert in seiner ersten Durchlassstellung D, wodurch der Anschluss 48.1 des Auslassklappenantriebe 48 mit Druck beaufschlagt und die Kolben 52 der Auslassklappenantriebe 48 bezogen auf die Zylinder 50 ausgefahren werden, um die Auslassklappe 30 zu öffnen. Sich in den nun nicht mit Druck beaufschlagten Bereichen 48b der Zylinder 50 befindendes Druckmittel kann über die Anschlüsse 48.2 in Richtung des Druckmittelreservoirs 42 abfließen.

Um die Auslassklappe 30 zu schließen, wird das Steuerventil 44 derart angesteuert, dass es seine Stellung C einnimmt und die Anschlüsse 48.2 der Auslassklappenantriebe 48 über die Druckleitung 58b und das sich weiterhin in seiner ersten Durchlassstellung D befindliche Verteilerventil 60 mit Druck beaufschlagt werden, so dass die Kolben 52 der Auslassklappenantriebe 48 bezogen auf die Zylinder 50 eingefahren werden, um die Auslassklappe 30 zu schließen. Sich in den nun nicht mit Druck beaufschlagten Bereichen 50a der Zylinder 50 befindendes Druckmittel kann nun in Richtung des Druckmittelreservoirs 42 abfließen.

Um die Ballenpresse 10 bzw. die Steuerungseinrichtung 38 in einem automatischen Modus zu betreiben, muss zuerst das Steuerventil 44 in eine seiner aktiven Stellungen A oder C gebracht werden, in der eine der Druckleitungen 58a oder b mit Druck beaufschlagt wird.

Im Anschluss kann durch eine Betätigung des Betätigungsschalters 64 der automatische Modus aktiviert werden, in dem die Steuerungseinrichtung 38 initial einen Neutralzustand einnimmt, in dem sich das Verteilerventil 60 in seiner Sperrstellung E befindet. Die Druckmessmittel 56a und b ermitteln nun einen jeweils einen in den Druckleitungen 58a bzw. b anstehenden Druck und übermitteln diese Information an die Steuereinrichtung 62. Darüber hinaus stehen der Steuereinrichtung 62 in bekannter Weise Informationen über den aktuellen Zustand der Ballepresse 10 zur Verfügung, insbesondere darüber, ob ein sich in der Ballenpresse 10 befindlicher Ballen 12 aus dem Pressraum 26 abgegeben werden soll, beispielsweise da ein Ballenbildungs- bzw. Ballenbindungs- und/oder Ballenumhüllungsprozess abgeschlossen ist.

Liegt der Steuereinrichtung 62 nun die Information vor, dass der Ballen 12 aus dem Pressraum 26 abgeben werden soll, so steuert diese das Verteilerventil 60 in Abhängigkeit von einer zwischen den Druckmessmitteln 56a und b anstehenden Druckdifferenz derart an, dass es seine ersten Durchlassstellung D einnimmt, wenn sich das Steuerventil 44 in seiner Stellung A befindet und somit an dem Druckmessmittel 56a bzw. in der Druckleitung 58a ein höherer Druck ansteht als an dem Druckmessmittel 56b bzw. in der Druckleitung 56b. Befindet sich das Steuerventil 44 allerdings bei Aktivierung des automatischen Modus in seiner Stellung C liegt in der Druckleitung 58b bzw. an dem Druckmessmittel 56b ein höherer Druck an als in der Druckleitung 56a bzw. an dem Druckmessmittel 56a und die Steuereinrichtung 62 steuert das Verteilerventil 60 derart an, dass es seine zweite Durchlassstellung F einnimmt. Entsprechend beaufschlagt die Druckquelle 40 die Bereiche 50a der Zylinder 50 mit Druck. Die Kolben 52 fahren nun bezogen auf die Zylinder 50 aus und verschwenken gemäß dem gezeigten Ausführungsbeispiel die Auslassklappe 30 nach oben. Diese gibt nun die Öffnung 32 frei und der Ballen 12 kann den Pressraum 26 verlassen.

Soll die Auslassklappe 30 (wieder) geschlossen werden, da der Ballen 12 den Pressraum 26 verlassen hat, was beispielsweise durch einen oder mehrere entsprechende Sensoren (beispielsweise nicht gezeigt Druck- oder Auflagesensoren) ermittelt werden kann, die beispielsweise an einer Entladerampe 66 (siehe Figur 1) der Ballenpresse 10 angeordnet sein können, so steuert die Steuereinrichtung 62 das Verteilerventil 60 derart an, dass es seine Stellung F einnimmt, wenn das Steuerventil 44 sich in seiner Stellung A befindet und somit in der Druckleitung 58a bzw. an dem Druckmessmittel 56a ein höherer Druck ansteht als in der Druckleitung 58b bzw. an dem Druckmessmittel 56b. Befindet sich das Steuerventil 44 aber in seiner Stellung C und es liegt somit in der Druckleitung 58b bzw. an dem Druckmessmittel 56b ein höherer Druck an als in der Druckleitung 58a bzw. an dem Druckmessmittel 56a, so steuert die Steuereinrichtung 62 das Verteilerventil 60 derart an, dass es sein Stellung A einnimmt.

Ist ein Betrieb im automatischen Modus nicht länger gewünscht, kann dieser deaktiviert werden, in dem die Bedienungsperson den Betätigungsschalter 64 entsprechend betätigt bzw. in eine entsprechende Stellung bringt. Es ist darüber hinaus bzw. alternativ vorgesehen, dass die Steuereinrichtung 38 in den manuellen Modus zurückkehrt, wenn das das Steuerventil 44 während eines Betriebs im automatischen Modus, gegebenenfalls auch nur kurzfristig, in seine Sperrstellung B verbracht wird, in der es einen Druckmittelstrom von der Druckquelle 42 zu dem Verteilerventil 60 unterbindet. Die Druckmessmittel 56a, b ermitteln dann nicht länger eine Druckdifferenz zwischen den in den Druckleitungen 58a, b anstehenden Drücken und die Steuereinrichtung 62 steuert das Verteilerventil 62 derart an, dass es seine Stellung A und damit die Steuerungsanordnung 38 den zuvor beschriebenen Neutralzustand des manuellen Modus einnimmt. Dies kann insbesondere dann günstig sein, wenn die Ballenpresse 10 in Gelände unterschiedlicher Geländeformen eingesetzt wird, beispielsweise einem Gelände, in dem sich Hügel und flache Geländebereiche abwechseln. Hier, wie auch in einer Notfallsituation, kann es wichtig und/oder hilfreich sein, dass eine Bedienungsperson schnell und/oder kurzfristig die manuelle Kontrolle über ein Abgeben des Ballens aus dem Pressraum bzw. eines Schließens und/oder Öffnen einer Auslassklappe (zurück-) erlangen kann.

## Patentansprüche

1. Einrichtung (38) zur Steuerung der Auslassklappe (30) einer Ballenpresse (10) in wenigstens einem manuellen und einem automatischen Modus mit einer ersten und einer zweiten Druckleitung (58a, b) über die ein Auslassklappenantrieb (48) selektiv mit Druck beaufschlagbar ist, **dadurch gekennzeichnet, dass** mit den Druckleitungen (58a, b) Druckmessmittel (56a, b) wirksam verbunden sind, die geeignet sind, einen jeweils in der Druckleitung (58a, b) anstehenden Druck zu ermitteln, und mit den Druckleitungen (58a, b) den Druckmessmitteln (56a, b) nachgeordnet ein wenigstens eine erste und eine zweiten Durchlassstellung (D, F) sowie eine Sperrstellung (E) aufweisendes Verteilerventil (60) verbunden ist, welches in dem wenigstens einen automatischen Modus in Abhängigkeit vom Wert einer Druckdifferenz zwischen den ermittelten Drücken eine vorbestimmte Stellung (D, E, F) einnimmt.

2. Einrichtung nach Anspruch 1, **dadurch gekennzeichnet, dass** das Verteilerventil (60) in einer ersten Durchlassstellung (D, F) den Auslassklappenantrieb derart mit Druck beaufschlagt, dass dieser die Auslassklappe (30) in eine erste Position bringt, in der sie einen Pressraum (26) der Ballenpresse (10) zumindest im Wesentlichen verschließt, und in einer zweiten Durchlassstellung (D, F) den Auslassklappenantrieb (48) derart mit Druck beaufschlagt, dass dieser die Auslassklappe (30) in eine zweite Position bringt, in der sie vorzugsweise eine Öffnung (32) freigibt, durch den ein Ballen (12) den Pressraum (26) verlassen kann, wobei die erste Durchlassstellung (D, F) in dem automatischen Modus vorzugsweise mit einem Wert der Druckdifferenz mit einem ersten, insbesondere positiven bzw. negativen, Vorzeichen und die zweite Durchlassstellung (D, F) mit einem Wert der Druckdifferenz mit einem dem ersten entgegensetzen Vorzeichen korrespondiert.

3. Einrichtung nach einem der vorherigen Ansprüche, **dadurch gekennzeichnet, dass** die Druckleitungen (58a b) derart ausgebildet sind, dass sie direkt oder indirekt an ein Steuerventil (44) eines Zugfahrzeugs (22) anschließbar sind, welches vorzugsweise derart mit einer Druckquelle (40) in Verbindung steht, dass es entweder die erste oder die zweite Druckleitung (58a, b) mit Druck beaufschlagen oder eine Sperrstellung (B) einnehmen kann, in der keine der Druckleitungen (58a, b) mit Druck beaufschlagt wird.

4. Einrichtung nach einem der vorherigen Ansprüche, **dadurch gekennzeichnet, dass** der automatische Modus nur dann aktivierbar ist, wenn der Wert der Druckdifferenz nicht zumindest annähernd Null ist bzw. das Steuerventil (44) nicht seine Sperrstellung (B) einnimmt und/oder der automatische Modus automatisch deaktivierbar vorgesehen ist, insbesondere sobald der Wert der Druckdifferenz zumindest annähernd Null ist bzw. das Steuerventil (44) seine Sperrstellung (B) einnimmt.

5. Einrichtung nach einem der vorherigen Ansprüche, **dadurch gekennzeichnet, dass** der Auslassklappenantrieb (48) zumindest einen Hydraulikmotor aufweist bzw. als ein solcher ausgebildet ist, wobei der Hydraulikmotor einen Zylinder (50) und einen in dem Zylinder (50) durch Beaufschlagung mit Druck in eine bezogen auf den Zylinder (50) eingefahrene und eine bezogen auf den Zylinder (50) ausgefahrene Stellung bringbaren Kolben (52) umfasst.

6. Einrichtung nach einem der vorherigen Ansprüche, **dadurch gekennzeichnet, dass** eine Steuereinheit (62) zur direkten oder indirekten Ansteuerung zumindest des Verteilerventil (60) vorgesehen ist.

7. Einrichtung nach einem der vorherigen Ansprüche, **dadurch gekennzeichnet, dass** eine Betätigungseinrichtung (64) zur Wahl wenigstens eines manuellen und eines automatischen Modus vorgesehen ist, die vorzugsweise mit einer/der Steuereinheit (62) wirksam verbindbar ist.

8. Ballenpresse (10) mit einer Auslassklappe (30), die mittels eines Auslassklappenantriebs (48) zumindest in eine erste Position, in der die Auslassklappe (30) einen Pressraum (26) der Ballenpresse (10) zumindest im Wesentlichen verschließt und in eine zweite Position bringbar ist, in der sie eine Öffnung (32) freigibt, durch die ein Ballen (12) den Pressraum (26) der Ballenpresse (10) verlassen kann, **gekennzeichnet durch** eine Einrichtung (38) nach einem der Ansprüche 1 bis 7.

9. Verfahren zur Steuerung der Auslassklappe (30) einer Ballenpresse (10) gemäß Anspruch 8 in wenigstens einem manuellen und einem automatischen Modus, **dadurch gekennzeichnet, dass** die Druckmessmittel (56a, b) einen jeweils in der Druckleitung (58a, b) anstehenden Druck ermitteln, und das Verteilerventil (60) zumindest in dem wenigstens einen automatischen Modus in Abhängigkeit vom Wert einer Differenz zwischen den ermittelten Drücken eine vorbestimmte Stellung (D, E, F) einnimmt.

## Claims

1. Device (38) for controlling the outlet flap (30) of a baler (10) in at least one manual and one automatic mode, having a first and a second pressure line (58a, b) via which an outlet flap drive (48) can be selectively charged with pressure, **characterized in that**, to the pressure lines (58a, b), there are operatively connected pressure measuring means (56a, b) which are suitable for determining a pressure respectively prevailing in the pressure line (58a, b), and, to the pressure lines (58a, b), downstream of the pressure measuring means (56a, b), there is connected a distributor valve (60) which has at least one first and one second pass-through position (D, F) and a shut-off position (E) and which, in the at least one automatic mode, assumes a predetermined position (D, E, F) in a manner dependent on the value of a pressure difference between the determined pressures.

2. Device according to Claim 1, **characterized in that**, in a first pass-through position (D, F), the distributor valve (60) charges the outlet flap drive with pressure such that said outlet flap drive moves the outlet flap (30) into a first position in which it at least substantially closes a pressing chamber (26) of the baler (10), and, in a second pass-through position (D, F), said distributor valve charges the outlet flap drive (48) with pressure such that said outlet flap drive moves the outlet flap (30) into a second position in which it preferably opens up an opening (32) through which a bale (12) can exit the pressing chamber (26), wherein the first pass-through position (D, F), in the automatic mode, preferably corresponds to a value of the pressure difference with a first, in particular positive or negative, sign and the second pass-through position (D, F) corresponds to a value of the pressure difference with an opposite sign in relation to the first sign.

3. Device according to one of the preceding claims, **characterized in that** the pressure lines (58a, b) are designed so as to be directly or indirectly connectable to a control valve (44) of a tractor vehicle (22), which control valve is preferably connected to a pressure source (40) such that said control valve can either charge the first or the second pressure line (58a, b) with pressure or can assume a shut-off position (B) in which neither of the pressure lines (58a, b) is charged with pressure.

4. Device according to one of the preceding claims, **characterized in that** the automatic mode is activatable only when the value of the pressure difference is not at least approximately zero or the control valve (44) does not assume its shut-off position (B), and/or the automatic mode is provided so as to be automatically deactivatable, in particular as soon as the value of the pressure difference is at least approximately zero or the control valve (44) assumes its shut-off position (B) .

5. Device according to one of the preceding claims, **characterized in that** the outlet flap drive (48) has at least one hydraulic motor or is designed as a hydraulic motor, wherein the hydraulic motor comprises a cylinder (50) and a piston (52) which, in the cylinder (50), can be moved, by exertion of pressure, into a retracted position in relation to the cylinder (50) and into a deployed position in relation to the cylinder (50).

6. Device according to one of the preceding claims, **characterized in that** a control unit (62) is provided for the direct or indirect actuation at least of the distributor valve (60).

7. Device according to one of the preceding claims, **characterized in that** an actuating device (64) is provided for the selection of at least one manual and one automatic mode, which actuating device is preferably operatively connectable to a/the control unit (62).

8. Baler (10) having an outlet flap (30) which, by means of an outlet flap drive (48), can be moved at least into a first position, in which the outlet flap (30) at least substantially closes a pressing chamber (26) of the baler (10), and can be moved into a second position, in which said outlet flap opens up an opening (32) through which a bale (12) can exit the pressing chamber (26) of the baler (10), **characterized by** a device (38) according to one of Claims 1 to 7.

9. Method for controlling the outlet flap (30) of a baler (10) according to Claim 8 in at least one manual and one automatic mode, **characterized in that** the pressure measuring means (56a, b) determine a pressure respectively prevailing in the pressure line (58a, b), and the distributor valve (60), at least in the at least one automatic mode, assumes a predetermined position (D, E, F) in a manner dependent on the value of a difference between the determined pressures.

## Revendications

1. Dispositif (38) pour commander le volet de sortie (30) d'une presse à balles (10) dans au moins un mode manuel et un mode automatique, comprenant une première et une deuxième conduite de pression (58a, b) par le biais desquelles un entraînement du volet de sortie (48) peut être sollicité en pression de manière sélective, **caractérisé en ce que** des moyens de mesure de pression (56a, b) sont reliés fonctionnellement aux conduites de pression (58a, b), lesquels sont aptes à déterminer une pression appliquée à chaque fois dans la conduite de pression (58a, b), et une soupape de distribution (60) présentant au moins une première et une deuxième position de passage (D, F) ainsi qu'une position de blocage (E) étant reliée aux conduites de pression (58a, b) en aval des moyens de mesure de pression (56a, b), laquelle, dans l'au moins un mode automatique, en fonction de la valeur d'une différence de pression entre les pressions déterminées, adopte une position prédéterminée (D, E, F).

2. Dispositif selon la revendication 1, **caractérisé en ce que** la soupape de distribution (60) sollicite en pression l'entraînement du volet de sortie dans une première position de passage (D, F) de telle sorte que celui-ci amène le volet de sortie (30) dans une première position dans laquelle il ferme au moins essentiellement un espace de presse (26) de la presse à balles (10), et sollicite en pression l'entraînement du volet de sortie (48) dans une deuxième position de passage (D, F) de telle sorte que celui-ci amène le volet de sortie (30) dans une deuxième position dans laquelle il libère de préférence une ouverture (32) à travers laquelle une balle (12) peut quitter l'espace de presse (26), la première position de passage (D, F) dans le mode automatique correspondant de préférence à une valeur de la différence de pression avec un premier signe notamment positif ou négatif, et la deuxième position de passage (D, F) correspondant à une valeur de la différence de pression de signe opposé au premier signe.

3. Dispositif selon l'une quelconque des revendications précédentes, **caractérisé en ce que** les conduites de pression (58a, b) sont réalisées de telle sorte qu'elles puissent être reliées directement ou indirectement à une soupape de commande (44) d'un véhicule tracteur (22) qui est de préférence en liaison avec une source de pression (40) de telle sorte qu'elle puisse soit solliciter en pression la première ou la deuxième conduite de pression (58a, b), soit qu'elle puisse adopter une position de blocage (B) dans laquelle aucune des conduites de pression (58a, b) n'est sollicitée en pression.

4. Dispositif selon l'une quelconque des revendications précédentes, **caractérisé en ce que** le mode automatique ne peut être activé que si la valeur de la différence de pression n'est pas au moins approximativement nulle ou si la soupape de commande (44) n'adopte pas sa position de blocage (B) et/ou le mode automatique est prévu de manière à pouvoir être désactivé automatiquement, en particulier dès que la valeur de la différence de pression est au moins approximativement nulle ou que la soupape de commande (44) adopte sa position de blocage (B).

5. Dispositif selon l'une quelconque des revendications précédentes, **caractérisé en ce que** l'entraînement du volet de sortie (48) présente au moins un moteur hydraulique ou est réalisé en tant que tel, le moteur hydraulique comprenant un cylindre (50) et un piston (52) pouvant être amené dans le cylindre (50) par sollicitation en pression dans une position rentrée par rapport au cylindre (50) et une position sortie par rapport au cylindre (50) .

6. Dispositif selon l'une quelconque des revendications précédentes, **caractérisé en ce qu'**une unité de commande (62) est prévue pour commander directement ou indirectement au moins la soupape de distribution (60).

7. Dispositif selon l'une quelconque des revendications précédentes, **caractérisé en ce qu'**un dispositif d'actionnement (64) est prévu pour sélectionner au moins un mode manuel et un mode automatique, lequel peut être relié de manière fonctionnelle de préférence à une unité de commande ou à l'unité de commande (62).

8. Presse à balles (10) comprenant un volet de sortie (30) qui peut être amené au moyen d'un entraînement du volet de sortie (48) au moins dans une première position dans laquelle le volet de sortie (30) ferme au moins essentiellement un espace de presse (26) de la presse à balles (10) et dans une deuxième position dans laquelle il libère une ouverture (32) à travers laquelle une balle (12) peut quitter l'espace de presse (26) de la presse à balles (10), **caractérisée par** un dispositif (38) selon l'une quelconque des revendications 1 à 7.

9. Procédé de commande du volet de sortie (30) d'une presse à balles (10) selon la revendication 8, dans au moins un mode manuel et un mode automatique, **caractérisé en ce que** les moyens de mesure de pression (56a, b) déterminent une pression s'appliquant à chaque fois dans la conduite de pression (58a, b) et la soupape de distribution (60), au moins dans l'au moins un mode automatique, adopte une position prédéterminée (D, E, F), en fonction de la valeur d'une différence entre les pressions déterminées.
